# DEMANDE DE BREVET EUROPEEN

(11) **EP 1 551 165 A1**
(43) Date de publication de la demande: **06.07.2005**
(21) Numéro de dépôt: 04292673.3
(22) Date de dépôt: 10.11.2004
(51) Int. Cl.: H04M 11/02

(54) **Passerelle de liaison d'un visioportier**

(30) Priorité: 28.11.2003 FR 0314031
(71) Demandeur: FRANCE TELECOM, 75015 Paris (FR)
(72) Inventeur: Danet, Pierre-Yves, 22700 Louannec (FR); Oudeville, Hugues, 22730 Tregastel (FR); Colin, François, 22560 Trebeurden (FR)
(74) Mandataire: Loisel, Bertrand

(57) **Abrégé**

Une passerelle (10) relie un visioportier d'une résidence (1) à un réseau de communication (100, 111). La passerelle comprend une unité de routage programmable (14, 15), pour transférer un appel commandé au niveau du visioportier à destination d'un résident, vers un terminal de transfert relié au réseau. Le terminal de transfert est affecté au résident pour un intervalle de temps par programmation de l'unité de routage. L'appel est transféré si une référence temporelle de l'appel appartient audit intervalle de temps.

## Description

La présente invention concerne une passerelle de liaison d'un visioportier à un réseau de communication.

Un visioportier est couramment utilisé pour contrôler l'accès par des visiteurs à des sites tels qu'une résidence d'habitation, un site industriel, un ensemble de bureaux,... Il est constitué d'un poste d'accès installé à l'entrée du site, et de postes de contrôle d'accès installés dans diverses parties du site. Pour une résidence d'habitation, les postes de contrôle d'accès sont installés dans les différents logements de la résidence, occupés par des résidents respectifs. Un visiteur qui se présente à l'entrée de la résidence pour rendre visite à l'un des résidents commande un appel de ce résident au niveau du poste d'accès. Cet appel est transmis au poste de contrôle d'accès du logement du résident, via un réseau de communication interne à la résidence. Le résident appelé autorise, ou refuse, l'accès de la résidence au visiteur.

La demande de brevet français 2 826 820 décrit un système de transfert d'un appel commandé au niveau du poste d'accès d'un visioportier, vers un terminal de communication distinct du poste de contrôle d'accès du logement du résident appelé. Ce système permet au résident de répondre à l'appel même lorsqu'il est éloigné du poste de contrôle d'accès de son logement, notamment lorsqu'il est absent de son logement. Pour cela, le poste d'accès et le terminal du résident sont reliés à un réseau de communication. Un serveur de transfert d'appels est aussi relié au réseau. Lorsqu'un appel est commandé au niveau du poste d'accès, cet appel est transmis au serveur. Le serveur transfère l'appel au terminal du résident. Le serveur comprend une unité de routage des appels, programmable, à laquelle est indiqué un numéro, un identifiant, ou une adresse électronique du terminal auquel l'appel est transféré.

Un inconvénient de ce système résulte du fait que chaque opération de transfert d'un appel nécessite une transmission préalable de l'appel par le réseau, entre le poste de contrôle d'accès et le serveur, avant que l'appel soit transféré à un terminal déterminé. Ce fonctionnement est particulièrement sensible à l'état d'encombrement, ou de congestion, du réseau de communication.

Un but de la présente invention consiste à proposer un système de transfert d'appels de visioportier qui est moins sensible à l'état d'encombrement du réseau de communication.

L'invention concerne une passerelle de liaison d'un visioportier de résidence à un réseau de communication. La passerelle incorpore une unité de routage programmable. Cette unité de routage comprend des moyens de transfert d'un appel commandé au niveau du visioportier à destination d'un résident vers un premier terminal relié au réseau. Ce premier terminal est affecté audit résident pour un intervalle de temps par programmation de l'unité de routage, de sorte que l'appel est transféré si une référence temporelle de l'appel appartient à l'intervalle de temps associé au premier terminal programmé.

Ainsi, lors du transfert d'un appel, une unique communication est établie par le réseau de communication, entre la passerelle de la résidence et le terminal auquel l'appel est transféré. La sensibilité de l'opération de transfert d'un appel à l'état d'encombrement du réseau est ainsi réduite.

Un autre avantage de l'invention réside dans le fait que, dans une zone à forte concentration de résidences équipées de visioportiers reliés à un même réseau de communication, la contribution des opérations de transferts d'appels de visioportiers à l'encombrement du réseau de communication est aussi réduite.

Un autre avantage encore de l'invention réside dans le fait qu'un terminal affecté à un résident déterminé est associé, lors de la programmation de l'unité de routage, à un intervalle de temps. Ainsi, un changement du terminal auquel un appel est transféré peut être automatiquement opéré, sans intervention du résident au moment où il se déplace d'un terminal à un autre.

En outre, la passerelle peut mettre en oeuvre des protocoles standards basés sur la technologie Internet pour l'appel transféré. Un terminal de communication existant relié au réseau peut alors être utilisé, en tant que terminal auquel est transféré un appel commandé au niveau du visioportier.

Selon le mode de réalisation préféré de l'invention, la passerelle comprend en outre un serveur relié à l'unité de routage et adapté pour recevoir des instructions de programmation de transferts d'appels et pour programmer l'unité de routage en fonction de ces instructions. La programmation des transferts d'appels peut ainsi être effectuée depuis un terminal éloigné de la passerelle, et ne nécessite pas un déplacement physique d'un opérateur ou du résident jusqu'au lieu d'implantation de la passerelle.

L'invention concerne aussi un procédé de transfert d'un appel commandé au niveau d'un visioportier, suivant lequel une passerelle de liaison du visioportier à un réseau de communication est utilisée, qui est du type précédemment décrit.

Le réseau de communication peut être un réseau local, interne à la résidence. Des appels peuvent alors être transférés vers différents terminaux disponibles pour chaque résident à l'intérieur de la résidence. De tels terminaux peuvent être, par exemple, une unité informatique, un assistant personnel, un téléviseur, un poste téléphonique fixe, un terminal mobile, etc., dans la mesure où chacun de ces terminaux est connecté par une liaison filaire ou radio au réseau de communication interne à la résidence.

Le réseau de communication peut aussi être un réseau externe à la résidence. Un appel peut alors être transféré à partir du visioportier à un terminal connecté au réseau et éloigné de la résidence.

La passerelle peut encore être reliée à la fois à un réseau de communication externe à la résidence, et à un réseau de communication interne à la résidence. Ainsi, un appel commandé au niveau du visioportier peut être transféré indifféremment vers un terminal situé à l'intérieur de la résidence ou à l'extérieur de celle-ci. Lorsqu'un appel est transféré vers un terminal relié au réseau interne à la résidence, l'opération du transfert de l'appel est alors indépendante de l'état d'encombrement du réseau externe.

Avantageusement, les deux réseaux externe et interne à la résidence utilisent la technologie Internet, de telle sorte que les flux d'information soient identiques sur les deux réseaux.

D'autres particularités et avantages de la présente invention apparaîtront dans la description ci-après d'un exemple de réalisation non limitatif, en référence aux dessins annexés, dans lesquels :
- la figure 1 représente un visioportier équipé d'une passerelle selon l'invention ;
- la figure 2 représente une architecture interne d'une passerelle selon l'invention ;
- la figure 3 illustre une table de transfert d'appels enregistrée dans une passerelle selon l'invention.

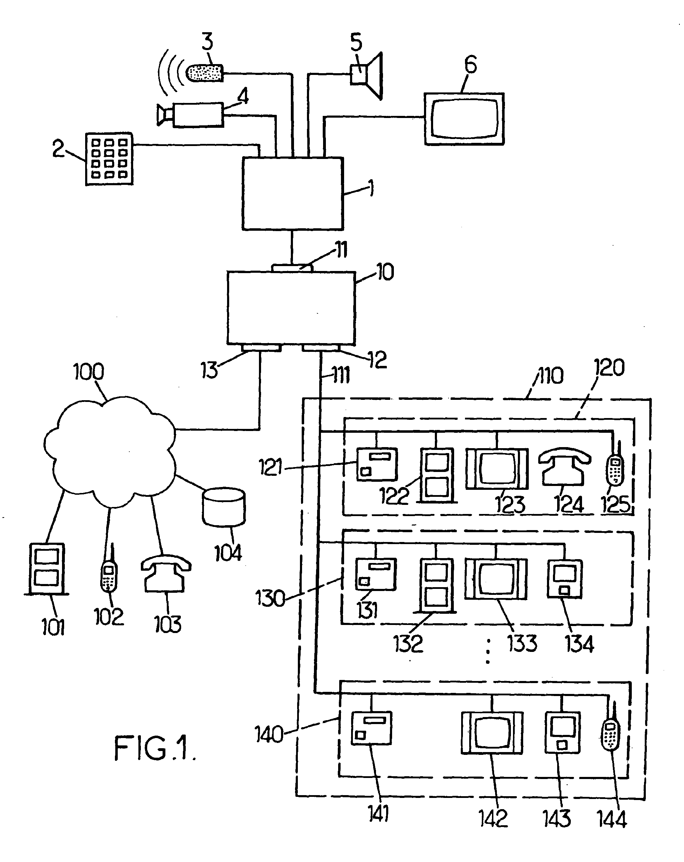

Conformément à la figure 1, une résidence 110 comprend plusieurs logements 120, 130 et 140, et est desservie par un réseau de communication 111. Le réseau 111 est interne à la résidence. Des terminaux dédiés à la fonction de réponse à des appels de visiteurs qui se présentent à l'entrée de la résidence 110, ou postes de contrôle d'accès 121, 131 et 141, sont disposés dans chaque logement et sont connectés au réseau 111. De tels postes de contrôle d'accès comprennent usuellement un haut-parleur, un écran de visualisation, ainsi qu'un bouton d'ouverture d'une porte d'accès à la résidence 110. Eventuellement, divers autres terminaux de communication peuvent aussi être reliés au réseau 111, tels que des unités informatiques 122 et 132, des téléviseurs 123, 133 et 142, un poste de téléphonie fixe 124, des assistants personnels 134 et 143, ou des terminaux de communication mobiles 125 et 144. Ces terminaux sont répartis dans les logements 120, 130, 140 de la résidence 110, de sorte qu'ils sont chacun à la disposition des occupants du logement correspondant.

Un visioportier 1, d'un type connu, est installé à une entrée de la résidence 110. Un tel visioportier comporte divers moyens de saisie de données, tels qu'un clavier 2, un microphone 3 et une caméra 4. Le clavier 2 permet notamment de sélectionner l'un des logements 120, 130 ou 140 pour commander un appel à destination d'un résident occupant de ce logement. Eventuellement, le clavier 2 ou le microphone 3 peut aussi permettre une saisie d'un message destiné au résident. Le visioportier 1 comporte aussi des moyens de présentation de données, tels qu'un haut-parleur 5 et un écran 6. Ainsi, une communication bidirectionnelle audio et/ou video peut être établie entre un visiteur qui commande un appel en sélectionnant l'un des logements au moyen du clavier 2 et un résident présent dans ce logement.

Selon un premier aspect de l'invention, le visioportier 1 est relié au réseau 111 par une passerelle d'accès 10. Pour cela, la passerelle 10 comporte un premier port 11 de connexion au visioportier 1 et un second port 12 de connexion au réseau 111. Un cordon de connexion spécifique relie le visioportier 1 au port 11. Ce cordon assure le transport électrique ou optique de signaux entre le visioportier 1 et la passerelle 10.

Eventuellement, la passerelle 10 peut comporter un troisième port 13 pour une connexion de la passerelle à un réseau 100 externe à la résidence 110. Le réseau 100 peut être de plusieurs types, notamment un réseau téléphonique commuté (RTC), ou un réseau par transmission de paquets, par exemple un réseau IP. Le réseau 100 peut notamment être adapté pour supporter des services multimedia selon les normes H.323 et SIP (pour «Session Initiation Protocol», en anglais). De façon connue, des terminaux de différents types peuvent être connectés au réseau 100, parmi lesquels une unité informatique 101, un terminal mobile 102, un poste téléphonique 103 et une messagerie 104.

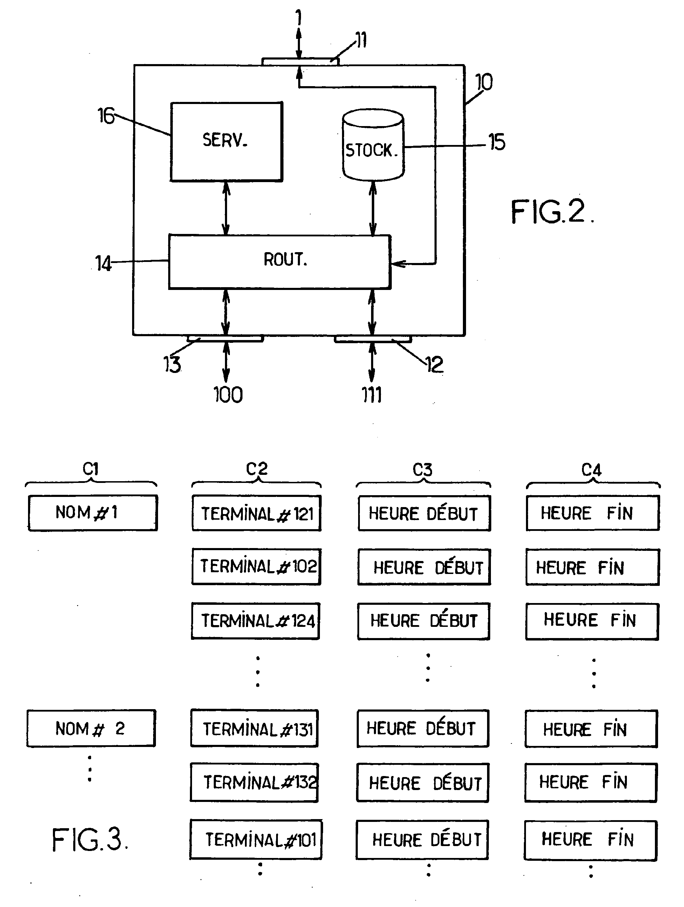

La figure 2 illustre un exemple d'architecture interne de la passerelle 10. La passerelle 10 incorpore une unité de routage 14, ou unité d'acheminement de messages, reliée aux ports 11-13 de la passerelle 10. L'unité 14 constitue un point d'accès aux réseaux 100 et 111 pour le visioportier 1.

Lorsqu'un appel est transmis par la passerelle 10 à un terminal relié au réseau 111, des messages appropriés sont émis par l'unité 14 à partir du port 12. La transmission de l'appel à l'un des terminaux connectés au réseau 111 est donc indépendante de l'état de congestion du réseau 100.

L'unité 14 est programmable. Pour cela, l'unité 14 est reliée à une unité de stockage de données d'acheminement 15. L'ensemble des données d'acheminement enregistrées dans l'unité 15 constitue une table de transfert d'appels.

La passerelle 10 incorpore en outre un serveur 16, adapté pour recevoir des données de programmation transmises par le réseau 100 ou le réseau 111, et par l'unité 14. De telles données sont contenues dans des messages à l'adresse du serveur 16. Le serveur 16 extrait les données de programmation de ces messages et les transmets à l'unité 14. Cette dernière les enregistre dans l'unité de stockage 15. Les données ainsi reçues et enregistrées constituent une programmation initiale ou une actualisation de la table de transfert d'appels.

La structure de la table de transfert des appels émis à partir du visioportier 1 constitue un second aspect de l'invention. Elle est illustrée par la figure 3. Elle comprend des champs répartis dans quatre colonnes notées C1-C4. La première colonne, C1, correspond à la liste des résidents disponible au niveau de visioportier 1 pour sélectionner l'un d'entre eux. Elle comprend, par exemple une indication du nom de chaque résident (nom#1, nom#2,...). Chaque nom peut correspondre à un logement distinct, ou à une personne particulière parmi les occupants de l'un des logements.

La deuxième colonne, C2, comprend, pour chaque indication de la colonne C1, une liste ordonnée d'adresses de terminaux ou de numéros d'adressage. Chacun des terminaux identifiés dans la colonne C2 est relié indiféremment à l'un des deux réseaux 100 ou 111.

Les troisième et quatrième colonnes, respectivement C3 et C4, définissent respectivement, pour chaque indication de terminal contenue dans la colonne C2, des indications de début et de fin d'un intervalle de temps pendant lequel le terminal correspondant doit être pris en compte pour un transfert d'appel. Ainsi, lorsqu'un appel est commandé à une heure qui appartient à l'intervalle de temps indiqué dans les colonnes C3 et C4 pour un terminal, par exemple le terminal #121, l'appel est transféré à ce terminal. Lorsque l'heure de l'appel est située en dehors de l'intervalle défini par les indications contenues dans les colonnes C3 et C4 pour un terminal, ce terminal n'est pas pris en compte. Chaque indication contenue dans les colonnes C3 et C4 peut être de la forme date+heure, afin de permettre une programmation de l'unité 14 pour une période de plusieurs jours.

On décrit maintenant le mode d'utilisation d'un système de transfert d'appels tel que décrit précédemment. Lors d'une étape d'installation, on relie le visioportier 1 au port 11 de la passerelle 10, ainsi que les ports 12 et 13 de la passerelle 10 à des bornes de connexions respectives des réseaux 111 et 100.

Une étape de programmation de l'unité 14 est ensuite effectuée, lors de laquelle une identification d'un résident est associée à un terminal pour un intervalle de temps. Lors de la programmation, un contrôle peut être opéré de sorte que des intervalles de temps définis par les indications des colonnes C3 et C4, à des lignes différentes et pour une même indication de la colonne C1, n'ait pas de recouvrement.

Grâce à la présence du serveur 16, la programmation de l'unité 14 peut être effectuée par un résident à partir d'un terminal quelconque relié à l'un des réseaux 100 ou 111. Pour cela, le résident peut saisir un code d'habilitation à programmer un transfert d'appel, puis il saisit des instructions de programmation qui sont transmises par le terminal utilisé au serveur 16 de la façon décrite plus haut. Les instructions de programmation correspondent aux contenus des champs des colonnes C1-C4. L'étape de programmation peut être complétée ou modifiée à volonté ultérieurement par le résident. En particulier, un résident peut modifier périodiquement les données programmées qui le concernent, par exemple au début de chaque semaine. Les appels sont ensuite automatiquement transférés au terminaux indiqués pour les intervalles de temps correspondants, sans que le résident ait besoin de reprendre l'opération de programmation à chaque fois qu'il quitte son logement. Le terminal auquel un appel est transféré varie automatiquement en fonction de la date et de l'heure de cet appel et des indications des colonnes C3 et C4.

Selon un troisième aspect de l'invention, la table d'acheminement décrite ci-dessus est complétée par une autre table, dite table de stratégie. La table de stratégie comprend, pour chaque indication de la colonne C1 de la table d'acheminement, une liste d'adresses ou de numéros d'adressage de terminaux reliés au réseau 100 ou au réseau 111. Chaque liste de la table de stratégie est ordonnée selon un ordre de priorité des terminaux correspondant indiqués dans cette liste. La programmation de la table de stratégie peut être effectuée à la suite de celle de la table d'acheminement, ou être conservée identique alors que la table d'acheminement est actualisée.

Lorsqu'un visiteur désire pénétrer dans la résidence 110, il commande un appel au niveau du visioportier 1, à destination de l'un des résidents, afin que ce dernier lui autorise l'accès à la résidence. Le choix du résident est opéré par un moyen de sélection usuel disponible au niveau du visioportier 1. Lors d'une première étape du transfert de l'appel, l'appel est transmis à partir du visioportier 1 à la passerelle 10. Grâce à la liaison particulière utilisée entre la passerelle 10 et le visioportier 1, cette première étape du transfert de l'appel n'emprunte pas les réseaux 100 et 111. Ainsi, elle n'est pas perturbée par d'éventuelles congestions du réseau 100. En outre, la connexion elle-même entre la passerelle 10 et le visioportier 1 n'est pas sujette à des congestions, étant donné qu'elle ne relie entre eux que ces deux éléments de communication.

L'unité 14 cherche alors dans la table de transfert les lignes de celle-ci qui correspondent au résident sélectionné par le visiteur. Cette recherche est effectuée à partir des indications de la colonne C1. L'unité 14 compare alors l'heure de l'appel aux heures indiquées dans les colonnes C3 et C4 pour ces lignes. Plusieurs situations peuvent alors se produire.

Selon une première situation, l'heure de l'appel, éventuellement associée à la date de l'appel, est intermédiaire entre les heures, éventuellement aussi associées à des dates, indiquées dans les colonnes C3 et C4 pour l'une des lignes correspondant au résident sélectionné. L'unité 14 transfert alors l'appel au terminal identifié dans la colonne C2 pour cette ligne. L'appel est opéré au niveau de ce terminal, en utilisant l'une des procédures connues de requête d'établissement d'une communication.

Si l'appel aboutit, c'est-à-dire qu'un utilisateur du terminal accepte la communication, celle-ci est établie. Le visiteur peut alors se faire reconnaître par cet utilisateur, et l'utilisateur peut lui autoriser l'accès à la résidence 110 en actionnant une commande sur le terminal dédiée à cette fonction.

Si l'appel n'aboutit pas, c'est-à-dire que le terminal auquel l'appel est transféré n'est pas en état de fonctionnement, ou qu'aucun utilisateur n'est présent à proximité de ce terminal, ou encore qu'un utilisateur de ce terminal n'accepte pas l'appel, l'appel peut être maintenu au niveau de ce terminal pendant une durée d'attente déterminée, par exemple 30 secondes. A l'issue de cette durée d'attente, aucune communication n'est établie. L'unité 14 examine alors la liste de la table de stratégie associée au résident sélectionné par le visiteur. Le procédé de transfert de l'appel est alors poursuivi en transférant l'appel au terminal correspondant à la première indication de cette liste. Si l'appel aboutit, une communication est établie. Si l'appel n'aboutit pas, il est alors transféré par l'unité 14 au terminal correspondant à la seconde indication de la liste de la table de stratégie associée au résident. Et ainsi de suite. Le procédé est poursuivi jusqu'à ce que l'appel aboutisse pour l'un des terminaux de la liste de la table de stratégie associée au résident sélectionné par le visiteur.

Selon une seconde situation, l'heure de l'appel n'est comprise dans l'intervalle de temps indiqué dans les colonnes C3 et C4 pour aucune ligne associée à une indication de la colonne C1 qui correspond au résident sélectionné par le visiteur. Le procédé de transfert de l'appel est alors poursuivi à partir de la table de stratégie d'une façon identique à celle décrite ci-dessus, en parcourant dans l'ordre la liste de cette table associée au résident sélectionné.

Selon une troisième situation, l'unité 14 a déjà atteint la dernière indication de terminal de la liste de la table de stratégie correspondant au résident sélectionné. Cette situation correspond au cas où l'appel n'a abouti pour aucun terminal correspondant à une indication de la table de transfert et/ou de la table de stratégie pour le résident sélectionné. L'appel peut alors être transféré par l'unité 14 vers un terminal déterminé par défaut pour le résident. Alternativement, l'appel peut être alors aussi transféré vers la messagerie 104, selon une adresse de messagerie affectée audit résident.

L'unité 14 peut comprendre en outre un module de conversion pour convertir un format d'un flux de communication en fonction d'un type de terminal. Ainsi, lorsque l'appel a abouti pour l'un des terminaux indiqué dans la colonne C2 de la table de transfert ou indiqué dans la table de stratégie, ou lorsque l'appel a été transféré à la messagerie 104, l'unité 14 adapte le format du flux de la communication en fonction du type du terminal ou de la messagerie. Une indication de ce type peut être enregistrée dans l'unité de stockage 15 ou, de façon connue, il peut être déterminé par l'unité 14 en fonction d'un identifiant du terminal ou de la messagerie.

Selon un perfectionnement de la passerelle 10, l'unité 14 peut comprendre en outre un contrôleur des moyens de transfert d'appels agencé de sorte qu'un appel commandé au niveau du visioportier à destination d'un résident déterminé est systématiquement transféré par l'unité 14 à un terminal déterminé. Un tel transfert systématique est effectué indépendamment des indications contenues dans les tables de transfert et de stratégie. Il est donc indépendant de la programmation précédemment décrite. Pour cette raison, un tel mode de fonctionnement peut être appelé « manuel ».

Le contrôleur peut être activé en réponse à la réception par l'unité 14 ou par le serveur 15 d'un message comprenant une consigne de transfert systématique. Ce message comprend une indication du résident pour lequel le transfert systématique doit être effectué, ainsi qu'une identification du terminal auquel les appels doivent être systématiquement transférés. Cette identification peut comprendre l'adresse ou un numéro d'adressage du terminal dans l'un des réseaux, et éventuellement un identifiant dans ce terminal. Selon une variante, le message qui comprend la consigne de transfert systématique des appels à un terminal déterminé est transmis à partir de ce terminal. En particulier, un tel message peut avoir la forme d'un SMS (pour « Short Message Service », en anglais) envoyé au moyen du terminal à l'adresse électronique de l'unité 14 ou du serveur 15. Ainsi, les identifications du résident et du terminal peuvent être automatiquement délivrées et introduites par le terminal dans le message de consigne à la suite d'une commande de transfert systématique saisie sur ce terminal.

L'invention a été décrite dans le cadre d'une mise en oeuvre pour une résidence d'habitation. Il est entendu qu'elle peut être appliquée de façon analogue à tous types de sites dont l'accès est contrôlé au moyen d'un visioportier.

De même, un mode de programmation particulier de l'unité 14 a été décrit, qui comprend une table de transfert et une table de stratégie. Il est entendu que ces deux tables peuvent être présentées d'une façon différente, ou même réunies en une table unique, tout en restant à l'intérieur du cadre de la présente invention. En particulier, les deux critères de sélection d'un terminal auquel un appel est transféré, à savoir le critère temporel et le critère de priorité, peuvent être combinés de diverses manières connues en programmation.

## Revendications

1. Passerelle (10) de liaison d'un visioportier de résidence (1) à un réseau de communication (100, 111), incorporant une unité de routage programmable (14, 15), ladite unité de routage comprenant des moyens de transfert d'un appel commandé au niveau du visioportier à destination d'un résident vers un premier terminal relié au réseau (101-103, 121-125) et affecté audit résident pour un intervalle de temps par programmation de l'unité de routage, les moyens de transfert étant agencés pour transférer l'appel si une référence temporelle de l'appel appartient à l'intervalle de temps.

2. Passerelle selon la revendication 1, incorporant en outre un serveur (16) relié à l'unité de routage (14, 15) et adapté pour recevoir des instructions de programmation du transfert de l'appel et pour programmer l'unité de routage en fonction desdites instructions.

3. Passerelle selon la revendication 1 ou 2, dans lequel les moyens de transfert sont en outre agencés pour transférer l'appel à un second terminal affecté audit résident par programmation de l'unité de routage, lorsque l'appel transféré audit premier terminal n'aboutit pas ou lorsque la référence temporelle de l'appel n'appartient pas à l'intervalle temporel associé audit premier terminal.

4. Passerelle selon l'une quelconque des revendications 1 à 3, dans lequel les moyens de transfert sont en outre agencés pour transférer l'appel à un terminal déterminé par défaut pour ledit résident, lorsque la référence temporelle de l'appel n'appartient à aucun intervalle temporel associé à un terminal affecté audit résident, et lorsque n'aboutit aucun appel transféré à un autre terminal affecté audit résident.

5. Passerelle selon l'une quelconque des revendications 1 à 3, dans lequel les moyens de transfert sont en outre agencés pour transférer l'appel à une messagerie (104) selon une adresse de messagerie affectée audit résident, lorsque la référence temporelle de l'appel n'appartient à aucun intervalle temporel associé à un terminal affecté audit résident, et lorsque n'aboutit aucun appel transféré à un autre terminal affecté audit résident.

6. Passerelle selon l'une quelconque des revendications précédentes, dans lequel l'unité de routage (14, 15) comprend en outre un contrôleur des moyens de transfert agencé pour commander un transfert systématique de l'appel à un terminal déterminé, lorsqu'un message contenant une consigne de transfert systématique est reçu par la passerelle pour ledit résident.

7. Passerelle selon l'une quelconque des revendications précédentes, comprenant en outre des moyens de conversion agencés pour convertir un format d'un flux de communication transmis à la suite d'un appel transféré à un terminal (101-103, 121-125), en fonction d'un type dudit terminal.

8. Procédé de transfert d'un appel commandé au niveau d'un visioportier de résidence (1), comprenant les étapes suivantes :
- liaison du visioportier à un réseau de communication (100, 111) en utilisant une passerelle (10) connectée entre le visioportier et le réseau de communication ;
- programmation d'une unité de routage (14, 15) de ladite passerelle (10), de sorte qu'au moins un terminal relié au réseau (101-103, 121-125) est affecté à un résident pour un intervalle de temps ;
et comprenant le étapes suivantes lorsqu'un appel est commandé au niveau du visioportier (1) à destination du résident :
- transmission de l'appel à partir du visioportier (1) à la passerelle (10) ;
- transfert, par l'unité de routage (14, 15), de l'appel à un premier terminal affecté audit résident si une référence temporelle de l'appel appartient à l'intervalle de temps associé audit premier terminal.

9. Procédé selon la revendication 8, dans lequel le réseau de communication (111) est interne à la résidence (110).

10. Procédé selon la revendication 8, dans lequel le réseau de communication (100) est externe à la résidence (110).

11. Procédé selon la revendication 8, dans lequel la passerelle (10) est reliée d'une part à un réseau de communication externe à la résidence (100) et d'autre part à un réseau de communication interne à la résidence (111).

12. Procédé selon l'une quelconque des revendications 8 à 11, suivant lequel la programmation de l'unité de routage (14, 15) est effectuée à partir d'instructions envoyées par le réseau (100, 111) à la passerelle (10).

13. Procédé selon l'une quelconque des revendications 8 à 12, suivant lequel, lorsque l'appel transféré audit premier terminal n'aboutit pas ou lorsque pas la référence temporelle de l'appel n'appartient pas à l'intervalle de temps associé audit premier terminal, l'appel est ensuite transféré par l'unité de routage (14, 15) à un second terminal affecté audit résident par programmation de l'unité de routage.

14. Procédé selon l'une quelconque des revendications 8 à 13, suivant lequel, lorsque la référence temporelle de l'appel n'appartient à aucun intervalle de temps associé à un terminal affecté audit résident, et lorsque n'aboutit aucun appel transféré à un autre terminal affecté audit résident, l'appel est ensuite transféré par l'unité de routage (14, 15) à un terminal déterminé par défaut pour ledit résident.

15. Procédé selon l'une quelconque des revendications 8 à 13, suivant lequel, lorsque la référence temporelle de l'appel n'appartient à aucun intervalle de temps associé à un terminal affecté audit résident, et lorsque n'aboutit aucun appel transféré à un autre terminal affecté audit résident, l'appel est ensuite transféré par l'unité de routage (14, 15) à une messagerie (104) selon une adresse de messagerie affectée audit résident.

16. Procédé selon l'une quelconque des revendications 8 à 15, suivant lequel l'appel est systématiquement transféré par l'unité de routage (14, 15) à un terminal déterminé, lorsqu'une consigne de transfert systématique est transmise à la passerelle pour ledit résident.

17. Procédé selon la revendication 16, suivant lequel ladite consigne est émise à partir dudit terminal déterminé, et comprend une identification dudit terminal déterminé.

18. Procédé selon l'une quelconque des revendications 8 à 17, suivant lequel un format d'un flux de communication transmis à la suite d'un appel transféré à un terminal est converti en fonction d'un type dudit terminal.
